# EUROPEAN PATENT APPLICATION

(11) **EP 4 790 475 A1**
(43) Date of publication of application: **12.08.2026**
(21) Application number: 24884952.3
(22) Date of filing: 01.11.2024
(51) Int. Cl.: G02B 27/01, G02B 1/14

(54) **HEAD-UP DISPLAY GLASS AND HEAD-UP DISPLAY SYSTEM**

(30) Priority: 03.11.2023 CN 202311457600
(71) Applicant: Fuyao Glass Industry Group Co., Ltd., Fuqing, Fujian 350300 (CN)
(72) Inventor: TSO, Fai, Fujian 350300 (CN); ZHANG, Jielin, Fujian 350300 (CN); LU, Guoshui, Fujian 350300 (CN); ZHANG, Xiaorong, Fujian 350300 (CN); ZHENG, Xinzhi, Fujian 350300 (CN); FUKUHARA, Kohta, Fujian 350300 (CN)
(74) Representative: Patentanwälte Olbricht Buchhold Keulertz
(86) International application number: PCT/CN2024/129243
(87) International publication number: WO 2025/092954

(57) **Abstract**

The present application provides a head-up display (HUD) glass and an HUD system. The HUD glass comprises laminated glass and a transparent nanofilm, wherein the transparent nanofilm can reflect P-polarized light. In the present application, by using a SiZrOx layer or a SiZrMoY layer as the outermost protective layer of the transparent nanofilm, a lower refractive index is maintained, and the hardness and extinction coefficient of the film layer are improved, such that the transparent nanofilm maintains a higher reflectivity for P-polarized light to ensure the high quality of HUD images and adapt to the exposed use environment in vehicles, and also makes the reflection spectrum of the transparent nanofilm for the P-polarized light smoother, which is conducive to realizing the neutral color display of the HUD images.

## Description

### CROSS-REFERENCE TO RELATED APPLICATIONS

The present application claims priority to the Chinese Patent Application No. 202311457600.6, filed with the State Intellectual Property Office of China on November 3, 2023 and entitled "Head-Up Display Glass and Head-Up Display System", the contents of which is incorporated herein by reference in its entirety.

### TECHNICAL FIELD

The present application relates to the field of vehicle glass, and specifically, it provides a head-up display (HUD) glass and a HUD system.

### BACKGROUND ART

Head-up display (HUD) refers to a driver-centric, blind-operable and multi-functional dashboard. It functions to project important driving information such as vehicle speed and navigation onto the windshield in front of the driver, allowing the driver to view important driving information such as vehicle speed and navigation while lowering or turning the head to a minimal extent and without taking his eyes off the driving direction, thereby improving driving safety.

Conventional HUD projection devices emit projection light that is substantially S-polarized light onto the front windshield. The S-polarized light is reflected off both the interior and exterior surfaces of the front windshield, thereby generating a primary image for the HUD display and a secondary image as a ghost image. To alleviate or eliminate the secondary image, a wedge-shaped PVB may be used as the intermediate bonding layer in the front windshield, thereby causing the secondary image to overlap with the primary image.

With the advancement of technology, HUD projection devices that mainly emit P-polarized light may be selected. In combination with Brewster's Law, glass exhibits substantially no reflection of P-polarized light incident at the Brewster angle. Therefore, providing a P-polarized light enhanced reflective coating on the front windshield can realize the primary image of the HUD display without generating a secondary image. For example, Chinese Patent CN116568501A discloses a composite glass pane for a HUD system with P-polarized radiation, in which a second coating is provided on the second surface (i.e., the interior surface) of the second glass pane (i.e., the inner glass pane) opposite to the intermediate layer, and the P-polarized radiation is used to generate HUD images. The second coating comprises a first dielectric material layer having a refractive index greater than or equal to 1.9 and a second dielectric material layer having a refractive index less than or equal to 1.6. The second layer is exposed inside the vehicle and comprises a silica (SiO₂)-based dielectric material. The SiO₂ film layer has a low surface hardness, resulting in the second coating susceptible to scratches from fine sand or other hard particulates, which in turn affects the overall appearance of the front windshield and even degrades the quality of HUD images.

### SUMMARY OF THE INVENTION

To solve the above technical problems, the object of the present application is to provide a HUD glass and a HUD system. The HUD glass can improve the surface hardness of the P-polarized light enhanced reflective coating without degrading the quality of HUD images, enabling the coating to better withstand the exposed in-vehicle environment.

To achieve the above object, the present application provides a HUD glass, comprising:
a laminated glass comprising an outer glass pane, an inner glass pane and a thermoplastic intermediate layer provided between the outer glass pane and the inner glass pane, wherein the outer glass pane comprises a first surface and a second surface opposite to each other, the inner glass pane comprises a third surface and a fourth surface opposite to each other, and the thermoplastic intermediate layer is provided between the second surface and the third surface; and
a transparent nanofilm provided on the fourth surface and capable of reflecting P-polarized light, wherein the transparent nanofilm comprises an outermost protective layer farthest from the fourth surface, and the outermost protective layer is a SiZrOx layer or a SiZrMOy layer, wherein x satisfies 1<x<3, y satisfies 1<y<3, and M is one or a combination of two or more selected from W, Nb, Ta, Y, Hf and Al;
wherein the refractive index n of the outermost protective layer is 1.50-1.60, and the extinction coefficient k of the outermost protective layer is 0.00001-0.001.

In some embodiments, the pencil hardness of the outermost protective layer is ≥ 9H.

In some embodiments, the physical thickness of the outermost protective layer is 30 nm-120 nm.

In some embodiments, the outermost protective layer is formed by a magnetron sputtering process, and the sputtering target of the outermost protective layer is a SiZr alloy target or a SiZrM alloy target.

In some embodiments, the SiZr alloy target comprises 50%-70% by mass of Si and 30%-50% by mass of Zr, and the SiZrM alloy target comprises 50%-75% by mass of Si, 10%-40% by mass of Zr and 0.1%-15% by mass of M.

In some embodiments, M is a combination of two or more selected from W, Nb, Ta, Y, Hf and Al, wherein the mass ratio of the most abundant element to the least abundant element in the combination is 1-2.

In some embodiments, the target power supply for the outermost protective layer is a high-power pulsed magnetron sputtering power supply; and for magnetron sputtering of the outermost protective layer, the operating voltage is 550-1200 V, the operating current is 200-1000 A, and the duty ratio is 5%-15%.

In some embodiments, the transparent nanofilm further comprises at least one stacked structure, which is provided between the fourth surface and the outermost protective layer, each stacked structure comprising a high-refractive-index layer and a low-refractive-index layer stacked in sequence, wherein the refractive index of the high-refractive-index layer is 1.61-2.75, and the refractive index of the low-refractive-index layer is 1.35-1.60.

In some embodiments, the high-refractive-index layer and the low-refractive-index layer are formed by a magnetron sputtering process, wherein the target power supply for the low-refractive-index layer is a medium-frequency magnetron sputtering power supply, and the duty ratio for magnetron sputtering of the low-refractive-index layer is 100%.

In some embodiments, the target power supply for the high-refractive-index layer is a medium-frequency magnetron sputtering power supply, and the duty ratio for magnetron sputtering of the high-refractive-index layer is 100%.

In some embodiments, the target power supply for at least one high-refractive-index layer is a high-power pulsed magnetron sputtering power supply, and the duty ratio for magnetron sputtering of at least one high-refractive-index layer is 5%-15%.

In some embodiments, the outermost protective layer is in direct contact with the low-refractive-index layer in the nearest stacked structure, and the physical thickness of the outermost protective layer is 30 nm-110 nm.

In some embodiments, the physical thickness of the low-refractive-index layer in the nearest stacked structure is greater than the physical thickness of the outermost protective layer.

In some embodiments, an optical adjustment layer is further provided between the outermost protective layer and the low-refractive-index layer in the nearest stacked structure, wherein the refractive index of the optical adjustment layer is 2.10-2.75, and the physical thickness of the outermost protective layer is 60 nm-120 nm.

In some embodiments, the physical thickness of the outermost protective layer is greater than the thickness of the optical adjustment layer.

In some embodiments, the optical adjustment layer is formed by a magnetron sputtering process, wherein the target power supply for the optical adjustment layer is a high-power pulsed magnetron sputtering power supply, and the duty ratio for magnetron sputtering of the optical adjustment layer is 5%-15%.

In some embodiments, at least one high-refractive-index layer comprises at least two high-refractive-index sublayers, wherein the refractive index of the high-refractive-index sublayer nearest to the fourth surface is 1.61-2.10, and the refractive index of the high-refractive-index sublayer farthest from the fourth surface is 2.11-2.75.

In some embodiments, the reflectivities of the HUD glass for P-polarized light with wavelengths of 629 nm, 529 nm and 469 nm at an incident angle of 65° are R1, R2 and R3 respectively, wherein R1≥19%, R2≥19% and R3≥19%.

The present application also provides a HUD system comprising a projection device and said HUD glass, wherein the projection device is used for generating projection light containing P-polarized light, the proportion of P-polarized light in the projection light is greater than or equal to 80%, and the projection light is incident on the transparent nanofilm at an incident angle of 38° to 85°.

In the HUD glass provided by the present application, a SiZrOx layer or a SiZrMOy layer is adopted as the outermost protective layer of the transparent nanofilm. Compared with the conventional SiO₂ layer as the outermost layer of a transparent nanofilm, the hardness and extinction coefficient of the film layer are improved while maintaining a low refractive index. This not only enables the transparent nanofilm to maintain a high reflectivity for P-polarized light to ensure high brightness and high contrast of HUD images, but is also more conducive to the exposed use of transparent nanofilm on the interior surface of vehicle glass. In addition, it unexpectedly makes the reflection spectrum of the transparent nanofilm for the P-polarized light more smooth, which is conducive to realizing the neutral color display of the HUD images.

### BRIEF DESCRIPTION OF THE DRAWINGS

Figure 1 is a schematic structural view of the HUD system provided by the present application.
Figure 2 is an enlarged cross-sectional schematic view of a first embodiment of the transparent nanofilm provided by the present application.
Figure 3 is an enlarged cross-sectional schematic view of a second embodiment of the transparent nanofilm provided by the present application.
Figure 4 is an enlarged cross-sectional schematic view of a third embodiment of the transparent nanofilm provided by the present application.
Figure 5 is an enlarged cross-sectional schematic view of a fourth embodiment of the transparent nanofilm provided by the present application.
Figure 6 is an enlarged cross-sectional schematic view of a fifth embodiment of the transparent nanofilm provided by the present application.
Figure 7 is an enlarged cross-sectional schematic view of a sixth embodiment of the transparent nanofilm provided by the present application.

### DETAILED DESCRIPTION OF EMBODIMENTS

For clearer understanding of the technical features, objects and beneficial effects of the present application, the technical solutions of the present application are described in detail below, but it shall not be construed as a limitation on the implementable scope of the present application.

Unless otherwise stated or contradictory, the terms or phrases used in the present application have the following meanings:
In the present application, the terms such as "first" and "second" are used merely for illustrative purposes, and shall not be construed as indicating or implying relative importance or implicitly specifying the number of the indicated technical features. Thus, a feature defined with "first" or "second" may explicitly or implicitly comprise at least one such feature.

Values of x, y and t in chemical formulae: where clearly defined, the defined ranges shall apply; where not clearly defined, the values may be determined according to the deposition in a stoichiometric, sub-stoichiometric or super-stoichiometric manner in the magnetron sputtering process, and the like.

High-temperature heat treatment: a high-temperature heat treatment of at least 500°C, such as a gravity bending process or press bending process at 550-720°C for the production of vehicle glass, and the like.

Refractive index: the refractive index at a wavelength of 550 nm.

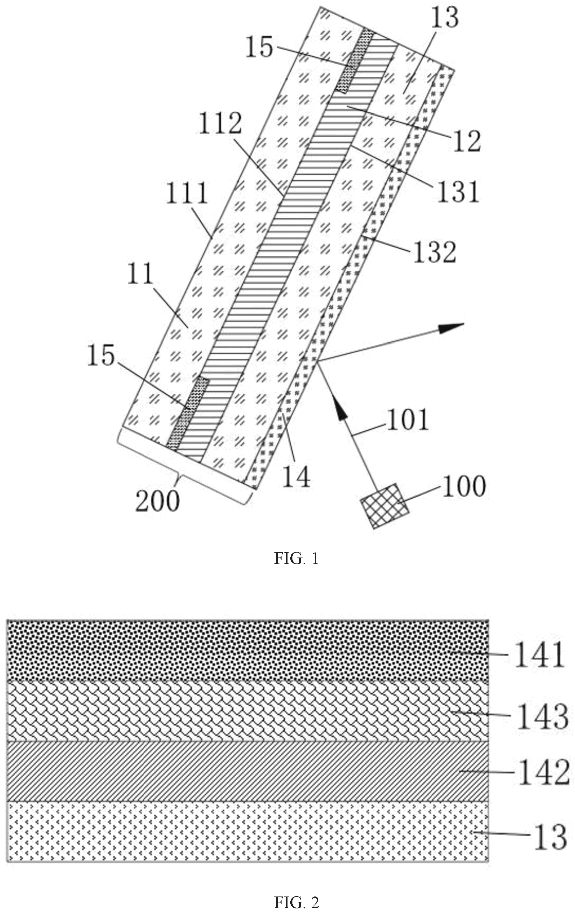

As shown in Figure 1, the present application provides a HUD system comprising a projection device 100 and a HUD glass 200. The projection device 100 is used for generating projection light 101 containing P-polarized light. The proportion of P-polarized light in the projection light 101 is greater than or equal to 80%. The projection device 100 is installed inside a vehicle, and the HUD glass 200 is usually installed on the vehicle at a mounting angle of 18°-45°. The mounting angle refers to the included angle between the HUD glass 200 when mounted and the horizontal plane, representing the inclination degree of the HUD glass 200.

To realize the HUD functionality, a transparent nanofilm 14 capable of reflecting P-polarized light is provided on the HUD glass 200. The projection light 101 generated by the projection device 100 is incident on the transparent nanofilm 14 at an incident angle of 38°-85°, and the transparent nanofilm 14 can reflect a part of the projection light 101 to form a HUD image which is recognized by the driver's eyes. Compared with the conventional HUD glass that is only used with the projection light of S-polarized light, the HUD glass 200 and the HUD system provided by the present application can meet the requirements of drivers wearing sunglasses. The HUD glass 200 has an exterior surface and an interior surface. When the HUD glass 200 is installed on a vehicle, the exterior surface is the side exposed to the outside of the vehicle, and the interior surface is the side exposed to the interior of the vehicle. The transparent nanofilm 14 is provided on the interior surface.

The projection device 100 is used for the output of relevant text and image information, such as speed, engine speed, fuel consumption, tire pressure, dynamic navigation, night vision and live map, onto the HUD glass 200, which can be viewed by an observer inside the vehicle, thereby implementing a head-up display (HUD) or even an augmented reality head-up display (AR-HUD). The projection device 100 is an element known to those skilled in the art, including but not limited to laser, a light-emitting diode (LED), a liquid crystal display (LCD), a digital light processing (DLP), electroluminescence (EL), a cathode ray tube (CRT), a vacuum fluorescent display (VFD), a collimating mirror, a spherical correction mirror, a convex lens, a concave lens, a reflecting mirror and/or a polarizer. Furthermore, the position and angle of incidence of the projection device 100 are adjustable to accommodate observers at different positions or heights within the vehicle.

In Figure 1, the HUD glass 200 comprises laminated glass and a transparent nanofilm 14. The laminated glass comprises an outer glass pane 11, an inner glass pane 13 and a thermoplastic intermediate layer 12 provided between the outer glass pane and the inner glass pane. The outer glass pane 11 comprises a first surface 111 and a second surface 112 opposite to each other. The inner glass pane 13 comprises a third surface 131 and a fourth surface 132 opposite to each other. The thermoplastic intermediate layer 12 is provided between the second surface 112 and the third surface 131. In the present application, the transparent nanofilm 14 serves as a P-polarized light enhanced reflective coating and is provided on the fourth surface 132. The transparent nanofilm 14 can reflect P-polarized light, thereby improving the reflectivity of the laminated glass for P-polarized light and thus enabling a ghosting-free HUD.

As shown in Figures 2 to 7, the transparent nanofilm 14 provided by the present application comprises an outermost protective layer 141 farthest from the fourth surface 132, and the outermost protective layer 141 is a SiZrOx layer or a SiZrMOy layer, wherein x satisfies 1<x<3, y satisfies 1<y<3, and M is one or a combination of two or more selected from W, Nb, Ta, Y, Hf and Al. The refractive index n of the outermost protective layer 141 is 1.50-1.60, and the extinction coefficient k of the outermost protective layer 141 is 0.00001-0.001. In the present application, a SiZrOx layer or a SiZrMOy layer is adopted as the outermost protective layer 141 of the transparent nanofilm 14. Compared with the conventional SiO₂ layer as the outermost layer of the transparent nanofilm 14, the hardness and extinction coefficient k of the film layer are improved while maintaining a low refractive index. This not only enables the transparent nanofilm 14 to maintain a high reflectivity for P-polarized light to ensure high brightness and high contrast of HUD images, but is also more conducive to the exposed use of transparent nanofilm 14 on the interior surface. In addition, it unexpectedly makes the reflection spectrum of the transparent nanofilm 14 for the P-polarized light more smooth, which is conducive to realizing the neutral color display of the HUD images. Furthermore, the visible light reflectivity of the HUD glass 200 to natural light inside the vehicle is reduced, which helps to mitigate the issue of dashboard reflections when the HUD glass 200 is used as a front windshield.

In some embodiments, the pencil hardness of the outermost protective layer 141 is ≥9H, which is conducive to the exposed use of the transparent nanofilm 14 on the interior surface of vehicle glass.

In some embodiments, the physical thickness of the outermost protective layer 141 is 30 nm-120 nm, specifically, for example, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 105 nm, 110 nm, 115 nm and 120 nm. It can be understood that if the physical thickness of the outermost protective layer 141 is less than 30 nm, it is not conducive to improving the hardness, abrasion resistance and scratch resistance of the transparent nanofilm 14; if the physical thickness of the outermost protective layer 141 is greater than 120 nm, it is not conducive to controlling the production cost of the transparent nanofilm 14 and realizing the neutral color display of the HUD images.

The transparent nanofilm 14 may be deposited layer-wise on the fourth surface 132 through a magnetron sputtering process. By optimally designing the material and thickness of each layer of the transparent nanofilm 14, it can withstand subsequent high-temperature heat treatment of at least 500°C and other bending forming processes, and the obtained HUD glass 200 can meet the service standards for vehicle glass in terms of optical properties, mechanical properties, and the like.

Specifically, the outermost protective layer 141 is formed by a magnetron sputtering process. The sputtering target of the outermost protective layer 141 is a SiZr alloy target or a SiZrM alloy target. A SiZrOx layer may be formed by sputter deposition using a SiZr alloy target in process gases of Ar and O₂, and a SiZrMOy layer may be formed by sputter deposition using a SiZrM alloy target in process gases of Ar and O₂, wherein x satisfies 1<x<3, y satisfies 1<y<3, and M is one or a combination of two or more selected from W (tungsten), Nb (niobium), Ta (tantalum), Y (yttrium), Hf (hafnium) and Al (aluminum).

The SiZr alloy target comprises 50%-70% by mass of Si (silicon) and 30%-50% by mass of Zr (zirconium), specifically, for example, 55% by mass of Si and 45% by mass of Zr, 58% by mass of Si and 42% by mass of Zr, 60% by mass of Si and 40% by mass of Zr, 62% by mass of Si and 38% by mass of Zr, or 64% by mass of Si and 36% by mass of Zr. The SiZrM alloy target comprises 50%-75% by mass of Si, 10%-40% by mass of Zr and 0.1%-15% by mass of M, specifically, for example, 50% by mass of Si, 40% by mass of Zr and 10% by mass of M, 54% by mass of Si, 38% by mass of Zr and 8% by mass of M, 56% by mass of Si, 30% by mass of Zr and 14% by mass of M, 58% by mass of Si, 37% by mass of Zr and 5% by mass of M, 60% by mass of Si, 28% by mass of Zr and 12% by mass of M, or 65% by mass of Si, 30% by mass of Zr and 5% by mass of M. It can be understood that impurity elements, such as Fe (iron), Cr (chromium), Ca (calcium), Ti (titanium), Cu (copper), Mn (manganese), O (oxygen) and N (nitrogen), may also inevitably exist in the SiZr alloy target or the SiZrM alloy target. The impurity elements are contained in an amount of less than 0.1%, more preferably less than 0.01%.

To achieve a balance between the hardness and refractive index of the SiZrMOy layer, the content of M in the SiZrM alloy target is preferably 0.1%-15%, specifically, for example, 0.1%, 0.5%, 1%, 2%, 3%, 4%, 5%, 6%, 7%, 8%, 9%, 10%, 11%, 12%, 13%, 14% and 15%, more preferably 1%-14%, 2%-12%, or 5%-10%. It can be understood that when M is a combination of two or more selected from W, Nb, Ta, Y, Hf and Al, the content of M refers to the sum of the contents of the two or more elements. For example, the content of M is 10%. When M is a single element, it may be 10% of Al, 10% of W, or 10% of Nb. When M is a combination of two elements, it may be 8% of Al and 2% of W, 5% of Al and 5% of Ta, or 4% of Nb and 6% of Y. When M is a combination of three elements, it may be 3% of Al, 3% of W and 4% of Hf, or 2% of Ta, 3% of Y and 5% of Al. When M is a combination of four elements, it may be 4% of Al, 2% of W, 2% of Hf and 2% of Nb.

Preferably, when M is a combination of two or more selected from W, Nb, Ta, Y, Hf and Al, the mass ratio of the most abundant element to the least abundant element in the combination is 1-2, specifically, for example, 1, 1.1, 1.2, 1.3, 1.4, 1.5, 1.6, 1.7, 1.8, 1.9, and 2. For example, if M is a combination of 5% of Al and 7% of Ta, the mass ratio of Ta to Al is 1.2. For another example, if M is a combination of 3% of Al, 3% of W and 4% of Hf, the mass ratio of Hf to Al or W is 1.33. The mass ratio is more preferably 1-1.5.

The target power supply for the outermost protective layer 141 is preferably a high-power pulsed magnetron sputtering power supply (HiPIMS power supply). The HiPIMS power supply can supply instantaneous high power of several hundred kilowatts or even megawatts to the sputtering target in short pulses during the sputter deposition process, thereby improving the ionization rate of the sputtering target, resulting in more chemical bonding in the SiZrOx layer and the SiZrMOy layer. This enhances the adhesion of the outermost protective layer 141, and the surface hardness of the outermost protective layer 141 is improved. Meanwhile, the SiZrOx layer and the SiZrMOy layer are deposited to be relatively loose, further reducing the refractive index of the outermost protective layer 141. Preferably, for magnetron sputtering of the outermost protective layer 141, the operating voltage is 550-1200 V, the operating current is 200-1000 A, and the duty ratio is 5%-15%. Examples of the operating voltage may comprise 550 V, 600 V, 650 V, 700 V, 750 V, 800 V, 850 V, 900 V, 950 V, 1000 V, 1050 V, 1100 V, 1150 V, 1200 V, and the like. The operating voltage is more preferably 600-1000 V. Examples of the operating current may comprise 200 A, 300 A, 400 A, 500 A, 600 A, 700 A, 800 A, 900 A, 1000 A, and the like. The operating current is more preferably 500-900 A. Examples of the duty ratio may comprise 5%, 6%, 7%, 8%, 9%, 10%, 11%, 12%, 13%, 14%, 15%, and the like.

The outer glass pane 11 is a transparent glass or a tinted glass, with a thickness of 0.7-4 mm and a visible light transmittance of more than 70%. The inner glass pane 13 is a transparent glass or a tinted glass, with a thickness of 0.7-4mm and a visible light transmittance of more than 70%. Preferably, at least one of the outer glass pane 11 and the inner glass pane 13 is a tinted glass, thereby providing a better display background for the HUD image and improving the contrast between the HUD image and the display background. The total iron content (calculated as Fe₂O₃) of the transparent glass is less than or equal to 0.1%, even less than or equal to 0.05%, and further less than or equal to 0.01%. The visible light transmittance of the transparent glass is 80%-95%. The total iron content (calculated as Fe₂O₃) of the tinted glass is 0.1% to 0.8%, even 0.1% to 0.5%. The visible light transmittance of the tinted glass is 75%-90%. In the present application, the thickness of the outer glass pane 11 is preferably greater than that of the inner glass pane 13. The thickness of the outer glass pane 11 may be 2.1-4 mm, and the thickness of the inner glass pane 13 may be 0.7-1.8 mm. For example, the thickness of the outer glass pane 11 is at least 0.3 mm greater than that of the inner glass pane 13. Adopting a thinner inner glass pane 13 may form a laminated glass structure with asymmetric thickness, which not only reduces the total thickness of the HUD glass 200 to achieve lightweighting, but also somewhat improves the strength of the HUD glass 200 and further improves the quality of the HUD image.

The thermoplastic intermediate layer 12 is a transparent thermoplastic polymer film or a tinted thermoplastic polymer film, with a visible light transmittance of more than 70%. The visible light transmittance of the thermoplastic intermediate layer 12 may be, but not limited to, 75%, 80%, 85%, 90%, or the like. The thermoplastic intermediate layer 12 is used to bond the outer glass pane 11 and the inner glass pane 13 together to form a laminated glass structure. Preferably, the thermoplastic intermediate layer 12 is a tinted thermoplastic polymer film, and the tinted thermoplastic polymer film may be a grey, green or blue thermoplastic polymer film, thereby providing a better display background for the HUD image and improving the contrast between the HUD image and the display background. The material of the thermoplastic polymer film may be selected from at least one of polyvinyl butyral (PVB), polyurethane (PU), ethylene-vinyl acetate copolymer (EVA) and ionomer (SGP). The thickness of the thermoplastic intermediate layer 12 is 0.38-2.28 mm; specifically, it may be, but not limited to, 0.38 mm, 0.76 mm, 1.14 mm, 1.52 mm, 1.9 mm, 2.28 mm, or any other value between 0.38 mm and 2.28 mm.

In the present application, the thermoplastic intermediate layer 12 may have a monolayer structure or a multilayer structure. Examples of the multilayer structure comprise a double-layer structure, a triple-layer structure, a four-layer structure, a five-layer structure, and the like. The thermoplastic intermediate layer 12 may also have other functions, for example, at least one tinted region provided as a sun strip to reduce the interference of sunlight on human eyes, an infrared absorbent added to provide sun protection and heat insulation functions, an UV absorbent added to provide UV blocking function, or at least one layer of the multilayer structure having a higher content of plasticizer to provide sound insulation function. Conventional HUD glass usually adopts a wedge-shaped PVB with a wedge angle of at least 0.3 mrad to eliminate ghost images (secondary images), making it relatively difficult to design, produce and configure the HUD system. The HUD glass 200 provided by the present application may be directly replaced with a standard thermoplastic intermediate layer of equal thickness, whose wedge angle is essentially zero. It can be understood that a wedge-shaped thermoplastic intermediate layer with a small wedge angle may also be selected in the present application, and the wedge angle of the wedge-shaped thermoplastic intermediate layer is preferably 0.01-0.15 mrad, specifically, for example, 0.01 mrad, 0.02 mrad, 0.03 mrad, 0.04 mrad, 0.05 mrad, 0.06 mrad, 0.07 mrad, 0.08 mrad, 0.09 mrad, 0.10 mrad, 0.11 mrad, 0.12 mrad, 0.13 mrad, 0.14 mrad, 0.15 mrad and the like. This may further eliminate the perspective ghosting generated caused by external scenery passing through the HUD glass 200. The wedge-shaped thermoplastic intermediate layer with a small wedge angle may be produced through a simple stretching process, thereby eliminating both reflection ghost images and perspective ghostings at low cost, and resulting in higher-quality HUD images and viewing experiences.

The HUD glass 200 further comprises a light-shielding layer 15, which is provided around the peripheral edge area of the HUD glass 200. The area provided with the light-shielding layer 15 has a low visible light transmittance, and is used to shield and protect automotive interior components, preventing the automotive interior components from damage due to aging caused by direct sunlight, thereby improving the service life of the automotive interior components. Meanwhile, the light-shielding layer 15 may also cover the automotive interior components to ensure the overall aesthetic appearance when viewed from the external. The region of the HUD glass 200 provided with the light-shielding layer 15 is a peripheral area, where the visible light transmittance is less than or equal to 5%, preferably less than or equal to 3%, more preferably less than or equal to 1%, and even substantially zero, that is, opaque. The region of the HUD glass 200 without the light-shielding layer 15 is a central area. The HUD glass 200 provided by the present application may be used as a front windshield. The visible light transmittance of the central area is greater than or equal to 70% to meet the safety standard requirements.

As shown in Figures 2 to 7, the transparent nanofilm 14 further comprises at least one stacked structure, which is provided between the fourth surface 132 and the outermost protective layer 141, with each stacked structure comprising a high-refractive-index layer and a low-refractive-index layer sequentially laminated. The refractive index of the high-refractive-index layer is 1.61-2.75, and the refractive index of the low-refractive-index layer is 1.35-1.60.

The material of the high-refractive-index layer is selected from at least one of oxides, nitrides or oxynitrides of Zr, Nb, Si, Sb, Sn, Zn, In, Al, Ni, Cr, Mg, Mn, V, W, Hf, Ta, Mo, Ga, Y, Bi and Ta. Specific examples of the material of the high-refractive-index layer comprise zinc tin oxide (ZnSnOt), magnesium-doped zinc tin oxide (ZnSnMgOt), titanium-doped zinc tin oxide (ZnSnTiOt), zirconium-doped zinc tin oxide (ZnSnZrOt), silicon aluminum nitride (SiAlNt), silicon zirconium nitride (SiZrNt), silicon aluminum oxynitride (SiAlONt), silicon zirconium oxynitride (SiZrONt), silicon nitride (SiNt), zirconium oxide (ZrOt), zinc oxide (ZnOt), aluminum-doped zinc oxide (AZO), hafnium and aluminum-doped zinc oxide (HAZO), yttriumdoped zinc oxide (YZO), gallium-doped zinc oxide (GZO), titanium oxide (TiOt), niobium oxide (Nb₂O₅) and silicon zirconium nitride (SiZrNt). The high-refractive-index layer is formed by a magnetron sputtering process, and the t value may be determined according to the deposition in a stoichiometric, sub-stoichiometric or super-stoichiometric manner in the magnetron sputtering process, and the like.

In some embodiments, considering factors such as desirable production cost control and process operability, the target power supply for the high-refractive-index layer is a medium-frequency magnetron sputtering power supply (MF power supply), and the duty ratio for magnetron sputtering of the high-refractive-index layer is 100%.

In other embodiments, for better realization of the optical properties, mechanical properties, appearance color and the like of the transparent nanofilm 14, the target power supply for at least one high-refractive-index layer is a high-power pulsed magnetron sputtering power supply (HiPIMS power supply), and the duty ratio for magnetron sputtering of at least one high-refractive-index layer is 5%-15%. It can be understood that the target power supply for one of the multiple high-refractive-index layers is a HiPIMS power supply, and the other target power supplies are MF power supplies. Alternatively, the HiPIMS power supply is used as the target power supply for each the high-refractive-index layers. To achieve a balance between the cost and properties, the target power supply for the high-refractive-index layer in the stacked structure nearest to the outermost protective layer is preferably a HiPIMS power supply.

The material of the low-refractive-index layer is selected from at least one of oxides, nitrides, carbides or fluorides of Si, Al and Mg. Specific examples of the material of the low-refractive-index layer comprise silicon oxide (SiO₂), aluminum oxide (Al₂O₃), magnesium oxide (MgO), magnesium fluoride (MgF) and the like. The low-refractive-index layer is formed by a magnetron sputtering process, the target power supply for the low-refractive-index layer is a medium-frequency magnetron sputtering power supply, and the duty ratio for magnetron sputtering of the low-refractive-index layer is 100%.

In Figures 2 to 5, the outermost protective layer 141 is in direct contact with the first low-refractive-index layer 143, and the second low-refractive-index layer 145 and the third low-refractive-index layer 147 in the nearest stacked structure. The outermost protective layer 141, together with the first low-refractive-index layer 143, the second low-refractive-index layer 145 and the third low-refractive-index layer 147, forms the outermost low-refractive-index layer of the transparent nanofilm 14. The outermost protective layer 141 not only serves as the outermost layer of the transparent nanofilm 14 to improve its mechanical properties, but also adjusts the optical properties, appearance color and the like of the transparent nanofilm 14 together with the first low-refractive-index layer 143, the second low-refractive-index layer 145 and the third low-refractive-index layer 147, thereby facilitating the exposed use of the transparent nanofilm 14 on the interior surface of vehicle glass. Meanwhile, this also helps reduce production costs. Preferably, the physical thickness of the outermost protective layer 141 is 30-110 nm. More preferably, the physical thickness of the outermost protective layer 141 is 30-100 nm, 30-90 nm, 30-80 nm, 30-70 nm, 30-60 nm, or the like.

As shown in Figure 2, the transparent nanofilm 14 comprises one stacked structure comprising a first high-refractive-index layer 142 and a first low-refractive-index layer 143. Specifically, the transparent nanofilm 14 comprises the first high-refractive-index layer 142, the first low-refractive-index layer 143 and the outermost protective layer 141, which are sequentially laminated and deposited on the fourth surface 132. The outermost protective layer 141 is in direct contact with the first low-refractive-index layer 143 in the stacked structure. The physical thickness of the first high-refractive-index layer 142 is 30-120 nm, and the physical thickness of the first low-refractive-index layer 143 is 5-90 nm. Optionally, the physical thickness of the first low-refractive-index layer 143 in the stacked structure is greater than that of the outermost protective layer 141.

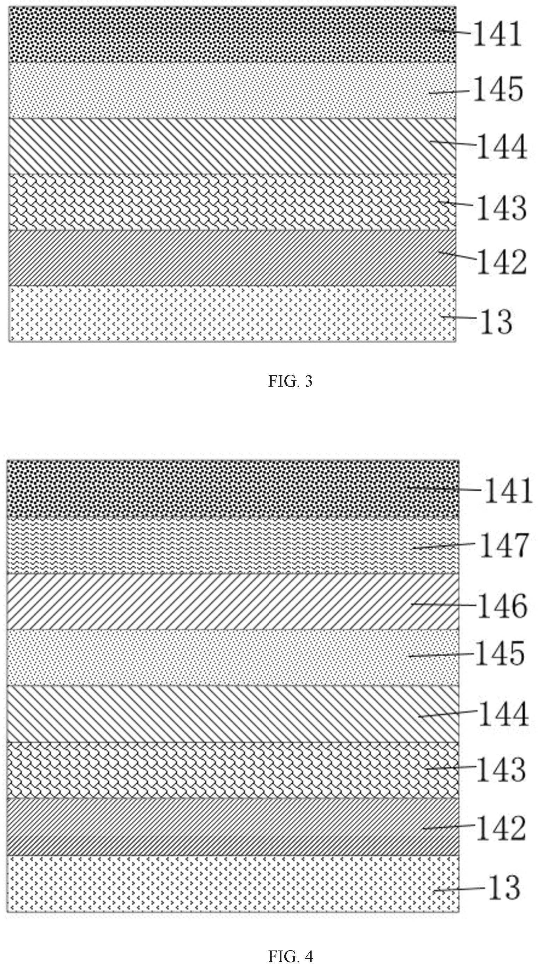

As shown in Figure 3, the transparent nanofilm 14 comprises two stacked structures. The first stacked structure comprises a first high-refractive-index layer 142 and a first low-refractive-index layer 143, and the second stacked structure comprises a second high-refractive-index layer 144 and a second low-refractive-index layer 145. Specifically, the transparent nanofilm 14 comprises the first high-refractive-index layer 142, the first low-refractive-index layer 143, the second high-refractive-index layer 144, the second low-refractive-index layer 145 and the outermost protective layer 141, which are sequentially laminated and deposited on the fourth surface 132. The outermost protective layer 141 is in direct contact with the second low-refractive-index layer 145 in the second stacked structure. The physical thickness of the first high-refractive-index layer 142 is 5-190 nm, the physical thickness of the first low-refractive-index layer 143 is 5-110 nm, the physical thickness of the second high-refractive-index layer 144 is 30-120 nm, and the physical thickness of the second low-refractive-index layer 145 is 5-90 nm. Optionally, the physical thickness of the second low-refractive-index layer 145 in the second stacked structure is greater than that of the outermost protective layer 141.

As shown in Figure 4, the transparent nanofilm 14 comprises three stacked structures. The first stacked structure comprises a first high-refractive-index layer 142 and a first low-refractive-index layer 143, the second stacked structure comprises a second high-refractive-index layer 144 and a second low-refractive-index layer 145, and the third stacked structure comprises a third high-refractive-index layer 146 and a third low-refractive-index layer 147. Specifically, the transparent nanofilm 14 comprises the first high-refractive-index layer 142, the first low-refractive-index layer 143, the second high-refractive-index layer 144, the second low-refractive-index layer 145, the third high-refractive-index layer 146, the third low-refractive-index layer 147 and the outermost protective layer 141, which are sequentially laminated and deposited on the fourth surface 132. The outermost protective layer 141 is in direct contact with the third low-refractive-index layer 147 in the third stacked structure. The physical thickness of the first high-refractive-index layer 142 is 120-190 nm, the physical thickness of the first low-refractive-index layer 143 is 5-50 nm, the physical thickness of the second high-refractive-index layer 144 is 110-190 nm, the physical thickness of the second low-refractive-index layer 145 is 20-110 nm, the physical thickness of the third high-refractive-index layer 146 is 30-120 nm, and the physical thickness of the third low-refractive-index layer 147 is 5-90 nm. Optionally, the physical thickness of the third lowrefractive-index layer 147 in the third stacked structure is greater than that of the outermost protective layer 141.

In some embodiments, at least one high-refractive-index layer is composed of a plurality of high-refractive-index sublayers, that is, at least one high-refractive-index layer comprises at least two high-refractive-index sublayers. Two adjacent high-refractive-index sublayers have different refractive indices. For better ensure that the optical properties, mechanical properties, appearance color and the like of the transparent nanofilm 14 meet the comprehensive requirements for automotive window glass, preferably, the refractive index of the high-refractive-index sublayer nearest to the fourth surface 132 is 1.61-2.10, and the refractive index of the high-refractive-index sublayer farthest from the fourth surface 132 is 2.11-2.75. Preferably, the refractive index of the high-refractive-index sublayer farthest from the fourth surface 132 is at least 0.3 higher than that of the high-refractive-index sublayer nearest to the fourth surface 132. Considering factors such as desirable production cost control and the ease of film system design, it is preferable that the at least one high-refractive-index layer comprises two or three high-refractive-index sublayers.

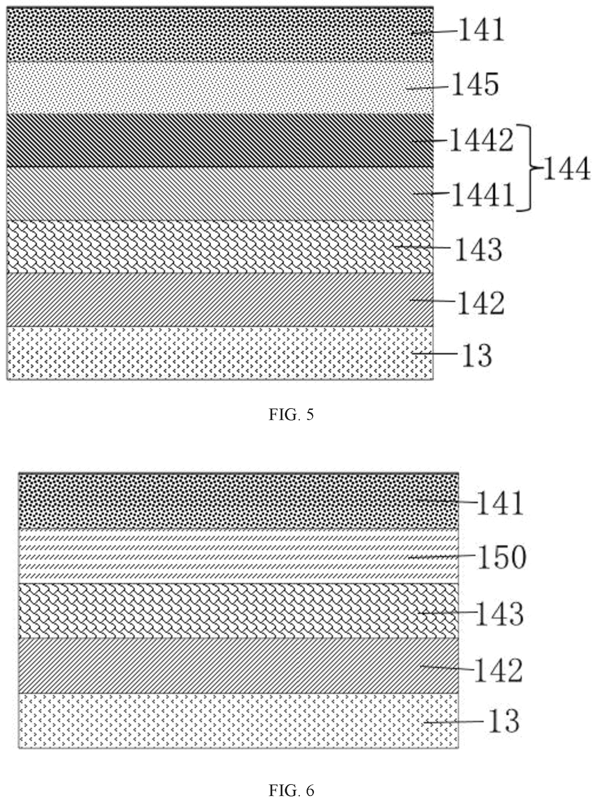

As shown in Figure 5, the transparent nanofilm 14 comprises two stacked structures. The first stacked structure comprises a first high-refractive-index layer 142 and a first low-refractive-index layer 143, and the second stacked structure comprises a second high-refractive-index layer 144 and a second low-refractive-index layer 145. The second high-refractive-index layer 144 comprises two high-refractive-index sublayers, that is, a high-refractive-index sublayer 1441 in direct contact with the first low-refractive-index layer 143 and a high-refractive-index sublayer 1442 in direct contact with the second low-refractive-index layer 145. The refractive index of the high-refractive-index sublayer 1441 may be, for example, 1.9-2.2, and the refractive index of the high-refractive-index sublayer 1442 may be, for example, 2.5-2.75.

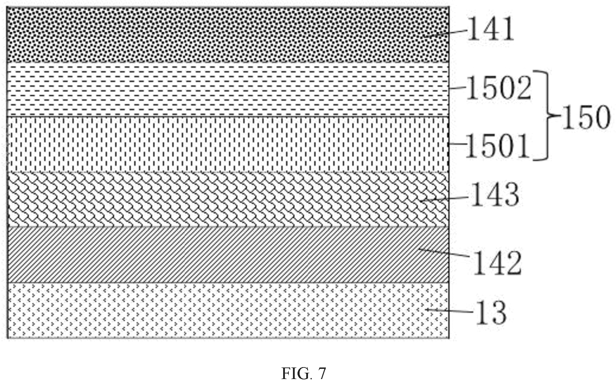

In Figures 6 and 7, an optical adjustment layer 150 is further provided between the outermost protective layer 141 and the low-refractive-index layer in the nearest stacked structure. The refractive index of the optical adjustment layer 150 is 2.10-2.75. The outermost protective layer 141 independently forms the outermost low-refractive-index layer of the transparent nanofilm 14, which is more conducive to improving the hardness, abrasion resistance and scratch resistance of the transparent nanofilm 14. Meanwhile, the outermost protective layer 141 forms a new stacked structure together with the optical adjustment layer 150, which not only enables the transparent nanofilm 14 to maintain a high reflectivity for P-polarized light to ensure high brightness and high contrast of HUD images, but is also more conducive to the exposed use of transparent nanofilm 14 on the interior surface of vehicle glass. Preferably, the physical thickness of the outermost protective layer 141 is 60-120 nm. More preferably, the physical thickness of the outermost protective layer 141 is 70-120 nm, 80-120 nm, 90-120 nm, or 100-120 nm.

The material of the optical adjustment layer 150 is selected from at least one of oxides, nitrides or oxynitrides of Zr, Nb, Si, Sb, Sn, Zn, In, Al, Ni, Cr, Mg, Mn, V, W, Hf, Ta, Mo, Ga, Y, Bi and Ta. Specific examples of the material of the optical adjustment layer 150 comprise zinc tin oxide (ZnSnOt), silicon nitride (SiNt), zirconium oxide (ZrOt), titanium oxide (TiOt), niobium oxide (Nb₂O₅), silicon zirconium nitride (SiZrNt) and the like. The optical adjustment layer 150 is formed by a magnetron sputtering process. The target power supply for the optical adjustment layer 150 is a medium-frequency magnetron sputtering power supply (MF power supply) or a high-power pulsed magnetron sputtering power supply (HiPIMS power supply). When an MF power supply is adopted, the duty ratio for magnetron sputtering of the optical adjustment layer 150 is 100%. When a HiPIMS power supply is adopted, the duty ratio for magnetron sputtering of the optical adjustment layer 150 is 5%-15%. The t value may be determined according to the deposition in a stoichiometric, sub-stoichiometric or super-stoichiometric manner in the magnetron sputtering process, and the like.

As shown in Figure 6, the transparent nanofilm 14 comprises one stacked structure and one optical adjustment layer 150. The stacked structure comprises a first high-refractive-index layer 142 and a first low-refractive-index layer 143. Specifically, the transparent nanofilm 14 comprises the first high-refractive-index layer 142, the first low-refractive-index layer 143, the optical adjustment layer 150 and the outermost protective layer 141, which are sequentially laminated and deposited on the fourth surface 132. The optical adjustment layer 150 is in direct contact with the first low-refractive-index layer 143. The outermost protective layer 141 forms a new stacked structure together with the optical adjustment layer 150, that is, the transparent nanofilm 14 actually comprises two stacked structures. The physical thickness of the optical adjustment layer 150 is 30-120 nm. Optionally, the physical thickness of the outermost protective layer 141 is greater than that of the optical adjustment layer 150.

As shown in Figure 7, the optical adjustment layer 150 is composed of a plurality of optical adjustment sublayers, i.e., the optical adjustment layer 150 comprises at least two optical adjustment sublayers, that is, a first optical adjustment sublayer 1501 in direct contact with the first low-refractive-index layer 143 and a second optical adjustment sublayer 1502 in direct contact with the outermost protective layer 141. The refractive index of the first optical adjustment sublayer 1501 may be, for example, 1.9-2.2, and the refractive index of the second optical adjustment sublayer 1502 may be, for example, 2.5-2.75.

The HUD glass 200 provided by the present application can maintain a high reflectivity for P-polarized light to ensure high brightness and high contrast of HUD images. Preferably, the reflectivities of the HUD glass for P-polarized light with wavelengths of 629 nm, 529 nm and 469 nm at an incident angle of 65° are R1, R2 and R3 respectively, wherein R1≥19%, R2≥19% and R3≥19%. With the increase of the reflectivity of the HUD glass 200 for P-polarized light, the emission power of the projection device 100 may also be decreased, reducing the heat generation of the projection device 100, and even reducing the volume of the projection device 100. Meanwhile, the HUD glass 200 provided by the present application unexpectedly makes the reflection spectrum of P-polarized light more smooth, which is conducive to realizing the neutral color display of the HUD images. Preferably, the difference between the maximum value and the minimum value among R1, R2 and R3 is less than or equal to 3%, more preferably less than or equal to 2%, and further preferably less than or equal to 1%.

### Comparative Examples 1-3 and Examples 1-10

In the present application, a 2.1 mm-thick transparent glass substrate was prepared. Each of the film layer structures from Comparative Examples 1-3 and Examples 1-10 was deposited on the surface of a transparent glass substrate through a magnetron sputtering process, and the transparent glass substrate with the film layer structure thereon was subjected to a high-temperature heat treatment of at least 500°C. The refractive index n and extinction coefficient k of the test samples from Comparative Examples 1-3 and Examples 1-10 were then measured, and the measurement results are listed in Table 1.

Comparative Example 1: Transparent glass substrate/SiO₂ layer, and a pure Si target as the sputtering target.

Comparative Example 2: Transparent glass substrate/SiZrOx layer, and a SiZr alloy target containing 64% of Si and 36% of Zr as the sputtering target.

Comparative Example 3: Transparent glass substrate/ZrO₂ layer, and a ZrO₁.₄ ceramic target as the sputtering target.

In the magnetron sputtering processes of Comparative Examples 1-3, the process gases were Ar and O₂, the target power supply was an MF power supply, and the duty ratio was 100%.

Examples 1-3: Transparent glass substrate/SiZrO_{X} layer, and a SiZr alloy target containing 64% of Si and 36% of Zr as the sputtering target.

Example 4: Transparent glass substrate/SiZrAlO_{X} layer, and a SiZrAl alloy target containing 58.5% of Si, 36.5% of Zr and 5% of Al as the sputtering target.

Examples 5-6: Transparent glass substrate/SiZrAlWO_{X} layer, and a SiZrAlW alloy target containing 55% of Si, 35% of Zr, 5% of Al and 5% of W as the sputtering target.

Example 7: Transparent glass substrate/SiZrAlTaO_{X} layer, and a SiZrAlTa alloy target containing 54% of Si, 34% of Zr, 5% of Al and 7% of Ta as the sputtering target.

Examples 8-9: Transparent glass substrate/SiZrYNbO_{X} layer, and a SiZrYNb alloy target containing 56% of Si, 34% of Zr, 5% of Y and 5% of Nb as the sputtering target.

Example 10: Transparent glass substrate/SiZrAlTaO_{X} layer, and a SiZrAlTa alloy target containing 71% of Si, 17% of Zr, 5% of Al and 7% of Ta as the sputtering target.

In the magnetron sputtering processes of Examples 1-10, the process gases were Ar and O₂, the target power supply was a HiPIMS power supply, and the duty ratio was 5%-15%.

**Table 1: Measurement results of test samples from Comparative Examples 1-3 and Examples 1-10**

| | Sputtering Target | Target Power Supply | Operating Voltage | Operating Current | Duty ratio | Refractive Index n | Extinction Coefficient k |
|---|---|---|---|---|---|---|---|
| Comparative Example 1 | Si | MF | 410V | 90A | 100% | 1.48 | 0 |
| Comparative Example 2 | SiZr | MF | 487.5V | 86.4A | 100% | 1.60 | 0 |
| Comparative Example 3 | ZrO_{1.4} | MF | 515V | 52.2A | 100% | 2.24 | 0.00054 |
| Example 1 | SiZr | HiPIMS | 650V | 570A | 10% | 1.54 | 0.00003 |
| Example 2 | SiZr | HiPIMS | 650V | 570A | 9% | 1.54 | 0.00003 |
| Example 3 | SiZr | HiPIMS | 900V | 900A | 6% | 1.50 | 0.00008 |
| Example 4 | SiZrAl | HiPIMS | 650V | 600A | 10% | 1.54 | 0.00005 |
| Example 5 | SiZrAlW | HiPIMS | 650V | 600A | 8% | 1.55 | 0.00039 |
| Example 6 | SiZrAlW | HiPIMS | 650V | 600A | 10% | 1.55 | 0.00039 |
| Example 7 | SiZrAlTa | HiPIMS | 650V | 600A | 9% | 1.57 | 0.00045 |
| Example 8 | SiZrYNb | HiPIMS | 650V | 600A | 9% | 1.56 | 0.00064 |
| Example 9 | SiZrYNb | HiPIMS | 650V | 600A | 10% | 1.56 | 0.00064 |
| Example 10 | SiZrAlTa | HiPIMS | 650V | 600A | 10% | 1.53 | 0.00023 |

It can be seen from Table 1 that in Comparative Examples 1 and 2, where an MF power supply was adopted for magnetron sputtering, although an SiO₂ layer or a SiZrO_{X} layer having a refractive index n≤1.6 were obtained, their extinction coefficients k were both 0. In Comparative Example 3, where an MF power supply was adopted for magnetron sputtering, a ZrO₂ layer with a high refractive index was obtained, which has a refractive index n=2.24 and an extinction coefficient k=0.00054. In comparison with Comparative Examples 1-3, in Examples 1-10, where a HiPIMS power supply was adopted for magnetron sputtering, a SiZrO_{X} layer or a SiZrMOy layer having a refractive index n=1.50-1.60 was obtained by using a SiZr alloy target or a SiZrM alloy target. While maintaining a low refractive index, the extinction coefficient k of the SiZrO_{X} layer or SiZrMOy layer was increased to 0.00001-0.001, making the SiZrO_{X} layer or SiZrMOy layer more suitable for serving as the outermost protective layer 141 of the transparent nanofilm 14. This makes the reflection spectrum of the transparent nanofilm 14 for the P-polarized light more smooth, which is conducive to realizing the neutral color display of the HUD images. Optionally, the refractive index n of the SiZrO_{X} layer or SiZrMOy layer as the outermost protective layer 141 is 1.50-1.57, 1.51-1.56, 1.52-1.55, or the like. Optionally, the extinction coefficient k of the SiZrO_{X} layer or SiZrMOy layer as the outermost protective layer 141 is 0.00003-0.0009, 0.00008-0.0008, or 0.0001-0.0007.

### Comparative Examples 4-5 and Examples 11-12

An outer glass pane 11, a thermoplastic intermediate layer 12 and an inner glass pane 13 were prepared, wherein the outer glass pane 11 was a 2.1 mm-thick transparent glass (clear glass), the thermoplastic intermediate layer 12 was a 0.76 mm-thick standard transparent PVB, and the inner glass pane 13 was a 2.1 mm-thick transparent glass (clear glass). The transparent nanofilms from Comparative Examples 4-5 and Examples 11-12 were deposited on the fourth surface 132 of the inner glass pane 13 through a magnetron sputtering process and then manufactured in accordance with the vehicle glass production process to obtain the HUD glass of Comparative Examples 4-5 and Examples 11-12.

A HUD system was formed by combining a projection device with the HUD glass of Comparative Examples 4-5 and Examples 11-12. A projection light containing at least 99% of P-polarized light was generated in the projection device, and it was incident on the transparent nanofilm at an incident angle of 38°-85°. The position of the projection device and the incident angle of the projection light were adjusted to ensure that the HUD image appeared as clear as possible to the observer. The P-polarized light reflectivity, reflection color and visible light transmittance were measured and calculated, and a film hardness test was conducted. The test results are listed in Table 2.

P-polarized light reflectivity: From the side of the transparent nanofilm, the reflectivities of the HUD glass for P-polarized light with wavelengths of 629 nm, 529 nm and 469 nm at an incident angle of 65° were measured and calculated as R1, R2 and R3 respectively in accordance with ISO9050.

Reflection color: From the side of the first surface, a and b values were calculated in accordance with the CIE Lab color model at an incident angle of 0° using a D65 light source and a field of view of 10°, wherein the a value represents the red-green value and the b value represents the yellow-blue value.

Visible light transmittance (TL): The transmittance of the HUD glass for visible light with a wavelength of 380-780 nm was measured and calculated in accordance with ISO9050.

Film hardness test: A pencil hardness test was conducted on the transparent nanofilm in accordance with GB/T 6739-2006. A gel pen hardness test was conducted by replacing the pencil with a 0.5 mm gel pen refill in accordance with GB/T 6739-2006. An abrasion resistance test was conducted on the transparent nanofilm in accordance with GB/T 18915.2-2013.

**Table 2: Test results of Comparative Examples 4-5 and Examples 11-12**

| | | Comparative Example 4 | Comparative Example 5 | Example 11 | Example 12 |
|---|---|---|---|---|---|
| Transparent nanofilm | First high-refractive-index layer | SiONt 166.6 nm | SiONt 166.6 nm | SiONt 166.6 nm | TiOt 5.5 nm |
| | First low-refractive-index layer | SiO₂ 75.8 nm | SiO₂ 75.8 nm | SiO₂ 75.8 nm | SiO₂ 9.8 nm |
| | Second high-refractive-index layer | Nb₂O₅ 22.9 nm | Nb₂O₅ 22.9 nm | Nb₂O₅ 22.9 nm | / |
| | | TiOt 46.4 nm | TiOt 42.7 nm | TiOt 46.0 nm | TiOt 51.3 nm |
| | Second low-refractive-index layer | SiO₂ 93.6 nm | SiZrOx 93.6 nm | SiO₂ 60.0 nm | SiO₂ 77 nm |
| | Outermost protective layer | / | / | SiZrOx 33.6 nm | SiZrAlTaOx 36.2 nm |
| P-polarized light reflectivity | R1 | 22.8% | 21.2% | 22.3% | 20.4% |
| | R2 | 22.8% | 21.1% | 22.3% | 23.1% |
| | R3 | 22.8% | 21.2% | 22.3% | 20.5% |
| Reflection color | a value | -0.5 | 0.2 | -3.1 | -10.2 |
| | b value | -13.4 | -25.7 | -19.4 | -12.1 |
| Visible light transmittance | | 76.2% | 78.2% | 75.6% | 72.4% |
| Film hardness test | Pencil hardness test | > 9H | > 9H | > 9H | > 9H |
| | Gel pen hardness test | Scratches | No scratches | No scratches | No scratches |
| | Abrasion resistance test | Failed | Failed | Passed | Passed |

In Table 2, a HiPIMS power supply was adopted for magnetron sputtering on both the TiOt sublayer of the second high-refractive-index layer and the outermost protective layer, and an MF power supply was adopted for magnetron sputtering on other film layers.

No outermost protective layer was provided in the transparent nanofilms of Comparative Examples 4 and 5. The layer of the transparent nanofilm of Comparative Example 4 farthest from the fourth surface was the SiO₂ layer of Comparative Example 1, and the layer of the transparent nanofilm of Comparative Example 5 farthest from the fourth surface was the SiZrO_{X} layer of Comparative Example 2. The visible light transmittance, P-polarized light reflectivity and reflection color of each HUD glass of Comparative Examples 4 and 5 can meet the requirements for realizing the HUD functionality. However, the hardness of the transparent nanofilms of Comparative Examples 4 and 5 was not conducive to the exposed use on the interior surface of vehicle glass. In addition, the refractive index of the SiZrO_{X} layer of Comparative Example 5 was higher than that of the SiO₂ layer of Comparative Example 4, and the P-polarized light reflectivity of Comparative Example 5 was somewhat decreased compared to that of Comparative Example 4.

In Example 11, the SiZrO_{X} layer of Example 1 was provided as the outermost protective layer. In Example 12, the SiZrAlTaO_{X} layer of Example 7 was provided as the outermost protective layer, and this outermost protective layer, together with the second low-refractive-index layer, formed the outermost low-refractive-index layer of the transparent nanofilm. The visible light transmittance, P-polarized light reflectivity and reflection color of each HUD glass of Examples 11 and 12 can meet the requirements for realizing the HUD functionality. In addition, the hardness of the transparent nanofilms of Examples 11 and 12 was conducive to the exposed use on the interior surface of vehicle glass. The difference between the maximum value and the minimum value among the P-polarized light reflectivities R1, R2 and R3 in Example 11 was less than or equal to 0.5%, and the difference between the maximum value and the minimum value among the P-polarized light reflectivities R1, R2 and R3 in Example 12 was less than or equal to 3%.

Meanwhile, the physical thicknesses of the SiZrO_{X} layer of Example 11 and the SiZrAlTaO_{X} layer of Example 12 were smaller than that of their respective second low-refractive-index layers, which was also conducive to reducing production costs.

The refractive index of the SiZrO_{X} layer of Example 11 was lower than that of the SiZrO_{X} layer of Comparative Example 5, the extinction coefficient of the SiZrO_{X} layer of Example 11 was higher than that of the SiZrO_{X} layer of Comparative Example 5, and the P-polarized light reflectivity of Example 11 was somewhat increased compared to that of Comparative Example 5.

### Examples 13-14

An outer glass pane 11, a thermoplastic intermediate layer 12 and an inner glass pane 13 were prepared, wherein the outer glass pane 11 was a 2.1 mm-thick transparent glass (clear glass), the thermoplastic intermediate layer 12 was a 0.76 mm-thick standard transparent PVB, and the inner glass pane 13 was a 2.1 mm-thick transparent glass (clear glass). The transparent nanofilms from Examples 13-14 were deposited on the fourth surface 132 of the inner glass pane 13 through a magnetron sputtering process and then manufactured in accordance with the vehicle glass production process to obtain the HUD glass of Examples 13-14.

A HUD system was formed by combining a projection device with the HUD glass of Examples 13-14. A projection light containing at least 99% of P-polarized light was generated in the projection device, and it was incident on the transparent nanofilm at an incident angle of 38°-85°. The position of the projection device and the incident angle of the projection light were adjusted to ensure that the HUD image appeared as clear as possible to the observer. The P-polarized light reflectivity, reflection color and visible light transmittance were measured and calculated, and a film hardness test was conducted. The test results are listed in Table 3.

**Table 3: Test results of Examples 13-14**

| | | Example 13 | Example 14 |
|---|---|---|---|
| Transparent nanofilm | First high-refractive-index layer | TiOt 58.8 nm | SiONt 167.7 nm |
| | First low-refractive-index layer | SiO₂ 75.0 nm | SiO₂ 11.5 nm |
| | Second high-refractive-index layer | / | SiONt 150.0 nm |
| | Second low-refractive-index layer | / | SiO₂ 61.8 nm |
| | Third high-refractive-index layer | / | SiONt 34.5 nm |
| | | / | TiOt 52.8 nm |
| | Third high-refractive-index layer | / | SiO₂ 55.5 nm |
| | Outermost protective layer | SiZrAlWO_{X} 33.8 nm | SiZrYNbOx 39.3 nm |
| P-polarized light reflectivity | R1 | 21.4% | 24.6% |
| | R2 | 24.4% | 23.8% |
| | R3 | 21.4% | 24.6% |
| Reflection color | a value | -8.9 | -9.4 |
| | b value | -11.5 | -3.5 |
| Visible light transmittance | | 72.5% | 75.5% |
| Film hardness test | Pencil hardness test | > 9H | > 9H |
| | Gel pen hardness test | No scratches | No scratches |
| | Abrasion resistance test | Passed | Passed |

In Table 3, a HiPIMS power supply was adopted for magnetron sputtering on all of the outermost protective layer, the first high-refractive-index layer of Example 13 and the TiOt sublayer of the third high-refractive-index layer of Example 14, and an MF power supply was adopted for magnetron sputtering on other film layers.

In Example 13, the SiZrAlWO_{X} layer of Example 5 was provided as the outermost protective layer, and this outermost protective layer, together with the first low-refractive-index layer, formed the outermost low-refractive-index layer of the transparent nanofilm. In Example 14, the SiZrYNbO_{X} layer of Example 8 was provided as the outermost protective layer, and this outermost protective layer, together with the third low-refractive-index layer, formed the outermost low-refractive-index layer of the transparent nanofilm. The visible light transmittance, P-polarized light reflectivity and reflection color of each HUD glass of Examples 13 and 14 can meet the requirements for realizing the HUD functionality. In addition, the hardness of the transparent nanofilms of Examples 13 and 14 was conducive to the exposed use on the interior surface of vehicle glass. The difference between the maximum value and the minimum value among the P-polarized light reflectivities R1, R2 and R3 in Example 13 was less than or equal to 3%, and the difference between the maximum value and the minimum value among the P-polarized light reflectivities R1, R2 and R3 in Example 14 was less than or equal to 1%.

Meanwhile, the physical thicknesses of the outermost protective layers in Examples 13 and 14 were smaller than that of their nearest low-refractive-index layers, which was also conducive to reducing production costs.

### Examples 15-18

An outer glass pane 11, a thermoplastic intermediate layer 12 and an inner glass pane 13 were prepared, wherein the outer glass pane 11 was a 2.1 mm-thick transparent glass (clear glass), the thermoplastic intermediate layer 12 was a 0.76 mm-thick standard transparent PVB, and the inner glass pane 13 was a 2.1 mm-thick transparent glass (clear glass). The transparent nanofilms from Examples 15-18 were deposited on the fourth surface 132 of the inner glass pane 13 through a magnetron sputtering process and then manufactured in accordance with the vehicle glass production process to obtain the HUD glass of Examples 15-18.

A HUD system was formed by combining a projection device with the HUD glass of Examples 15-18. A projection light containing at least 99% of P-polarized light was generated in the projection device, and it was incident on the transparent nanofilm at an incident angle of 38°-85°. The position of the projection device and the incident angle of the projection light were adjusted to ensure that the HUD image appeared as clear as possible to the observer. The P-polarized light reflectivity, reflection color and visible light transmittance were measured and calculated, and a film hardness test was conducted. The test results are listed in Table 4.

**Table 4: Test results of Examples 15-18**

| | | Example 13 | Example 14 | Example 15 | Example 16 |
|---|---|---|---|---|---|
| | First high-refractive-index layer | SiONt 166.6 nm | SiONt 165.6 nm | SiONt 166.4 nm | SiONt 166.9 nm |
| Transparent nanofilm | First low-refractive-index layer | SiO₂ 75.8 nm | SiO₂ 85.6 nm | SiO₂ 36.9 nm | SiO₂ 11.5 nm |
| | Second high-refractive-index layer | / | / | SiONt 138 nm | SiONt 150 nm |
| | Second low-refractive-index layer | / | / | SiO₂ 62.8 nm | SiO₂ 61.8 nm |
| | Optical adjustment layer | Nb₂O₅ 22.9 nm | Nb₂O₅ 18 nm | / | SiONt 34.5 nm |
| | | TiOt 44.7 nm | TiOt 48.2 nm | TiOt 49.9 nm | TiOt 52.8 nm |
| | Outermost protective layer | SiZrOx 93.6 nm | SiZrOx 100.1 nm | SiZrAlOx 106.9 nm | SiZrYNbOx 87.4 nm |
| P-polarized light reflectivity | R1 | 22.1% | 24.3% | 26.1% | 23.5% |
| | R2 | 22.0% | 24.2% | 25.4% | 22.7% |
| | R3 | 22.1% | 24.2% | 25.6% | 23.5% |
| Reflection color | a value | -0.7 | -5.1 | -0.1 | -4.5 |
| | b value | -20.4 | -14.4 | -19.1 | -2.8 |
| Visible light transmittance | | 77.5% | 73.5% | 74.5% | 78.9% |
| Film hardness test | Pencil hardness test | > 9H | > 9H | > 9H | > 9H |
| | Gel pen hardness test | No scratches | No scratches | No scratches | No scratches |
| | Abrasion resistance test | Passed | Passed | Passed | Passed |

In Table 4, a HiPIMS power supply was adopted for magnetron sputtering on both the TiOt sublayer of the optical adjustment layer and the outermost protective layer, and an MF power supply was adopted for magnetron sputtering on other film layers.

In Example 15, the SiZrO_{X} layer (n=1.54, k=0.00003) of Example 2 was provided as the outermost protective layer. In Example 16, the SiZrO_{X} layer (n=1.50, k=0.00008) of Example 3 was provided as the outermost protective layer. In Example 16, the SiZrAlO_{X} layer (n=1.54, k=0.00005) of Example 4 was provided as the outermost protective layer. In Example 18, the SiZrYNbO_{X} layer (n=1.56, k=0.00064) of Example 9 was provided as the outermost protective layer. Each of the outermost protective layers of Examples 15-18 independently formed the outermost low-refractive-index layer of the transparent nanofilm, and an optical adjustment layer was further provided between the outermost protective layer and the nearest low-refractive-index layer. The outermost protective layer and the optical adjustment layer formed a new stacked structure in together. The visible light transmittance, P-polarized light reflectivity and reflection color of the HUD glass of Examples 15-18 can meet the requirements for realizing the HUD functionality. The hardness of the transparent nanofilms of Examples 15-18 was conducive to the exposed use on the interior surface of vehicle glass. The difference between the maximum value and the minimum value among the P-polarized light reflectivities R1, R2 and R3 in Example 15 was less than or equal to 0.5%, the difference between the maximum value and the minimum value among the P-polarized light reflectivities R1, R2 and R3 in Example 16 was less than or equal to 1.5%, and the difference between the maximum value and the minimum value among the P-polarized light reflectivities R1, R2 and R3 in Examples 17-18 was less than or equal to 1%.

## Claims

1. A HUD glass, comprising:
a laminated glass comprising an outer glass pane, an inner glass pane and a thermoplastic intermediate layer provided between the outer glass pane and the inner glass pane, wherein the outer glass pane comprises a first surface and a second surface opposite to each other, the inner glass pane comprises a third surface and a fourth surface opposite to each other, and the thermoplastic intermediate layer is provided between the second surface and the third surface; and
a transparent nanofilm provided on the fourth surface and capable of reflecting P-polarized light, wherein the transparent nanofilm comprises an outermost protective layer farthest from the fourth surface, and the outermost protective layer is a SiZrOx layer or a SiZrMOy layer, wherein x satisfies 1<x<3, y satisfies 1<y<3, and M is one or a combination of two or more selected from W, Nb, Ta, Y, Hf, and Al;
wherein the refractive index n of the outermost protective layer is 1.50-1.60, and the extinction coefficient k of the outermost protective layer is 0.00001-0.001.

2. The HUD glass according to Claim 1, wherein the pencil hardness of the outermost protective layer is ≥ 9H.

3. The HUD glass according to Claim 1, wherein the physical thickness of the outermost protective layer is 30 nm-120 nm.

4. The HUD glass according to Claim 1, wherein the outermost protective layer is formed by a magnetron sputtering process, and the sputtering target of the outermost protective layer is a SiZr alloy target or a SiZrM alloy target.

5. The HUD glass according to Claim 4, wherein the SiZr alloy target comprises 50%-70% by mass of Si and 30%-50% by mass of Zr, and the SiZrM alloy target comprises 50%-75% by mass of Si, 10%-40% by mass of Zr and 0.1%-15% by mass of M.

6. The HUD glass according to Claim 5, wherein M is a combination of two or more selected from W, Nb, Ta, Y, Hf, and Al, wherein the mass ratio of the most abundant element to the least abundant element in the combination is 1-2.

7. The HUD glass according to Claim 4, wherein the target power supply for the outermost protective layer is a high-power pulsed magnetron sputtering power supply; and for magnetron sputtering of the outermost protective layer, the operating voltage is 550-1200 V, the operating current is 200-1000 A, and the duty ratio is 5%-15%.

8. The HUD glass according to Claim 1, wherein the transparent nanofilm further comprises at least one stacked structure, which is provided between the fourth surface and the outermost protective layer, with each stacked structure comprising a high-refractive-index layer and a lowrefractive-index layer stacked in sequence, wherein the refractive index of the high-refractive-index layer is 1.61-2.75, and the refractive index of the low-refractive-index layer is 1.35-1.60.

9. The HUD glass according to Claim 8, wherein the high-refractive-index layer and the low-refractive-index layer are formed by a magnetron sputtering process, and wherein the target power supply for the low-refractive-index layer is a medium-frequency magnetron sputtering power supply, and the duty ratio for magnetron sputtering of the low-refractive-index layer is 100%.

10. The HUD glass according to Claim 9, wherein the target power supply for the high-refractive-index layer is a medium-frequency magnetron sputtering power supply, and the duty ratio for magnetron sputtering of the high-refractive-index layer is 100%.

11. The HUD glass according to Claim 9, wherein the target power supply for at least one high-refractive-index layer is a high-power pulsed magnetron sputtering power supply, and the duty ratio for magnetron sputtering of at least one high-refractive-index layer is 5%-15%.

12. The HUD glass according to Claim 8, wherein the outermost protective layer is in direct contact with the low-refractive-index layer in the nearest stacked structure, and the physical thickness of the outermost protective layer is 30 nm-110 nm.

13. The HUD glass according to Claim 12, wherein the physical thickness of the low-refractive-index layer in the nearest stacked structure is greater than the physical thickness of the outermost protective layer.

14. The HUD glass according to Claim 8, wherein an optical adjustment layer is further provided between the outermost protective layer and the low-refractive-index layer in the nearest stacked structure, and wherein the refractive index of the optical adjustment layer is 2.10-2.75, and the physical thickness of the outermost protective layer is 60 nm-120 nm.

15. The HUD glass according to Claim 14, wherein the physical thickness of the outermost protective layer is greater than the thickness of the optical adjustment layer.

16. The HUD glass according to Claim 14, wherein the optical adjustment layer is formed by a magnetron sputtering process, and wherein the target power supply for the optical adjustment layer is a high-power pulsed magnetron sputtering power supply, and the duty ratio for magnetron sputtering of the optical adjustment layer is 5%-15%.

17. The HUD glass according to Claim 8, wherein at least one high-refractive-index layer comprises at least two high-refractive-index sublayers, wherein the refractive index of the high-refractive-index sublayer nearest to the fourth surface is 1.61-2.10, and the refractive index of the high-refractive-index sublayer farthest from the fourth surface is 2.11-2.75.

18. The HUD glass according to Claim 1, wherein the reflectivities of the HUD glass for P-polarized light with wavelengths of 629 nm, 529 nm, and 469 nm at an incident angle of 65° are R1, R2, and R3 respectively, wherein R1≥19%, R2≥19%, and R3≥19%.

19. A HUD system comprising a projection device and the HUD glass according to any one of Claims 1-18, wherein the projection device is used for generating projection light containing P-polarized light, the proportion of P-polarized light in the projection light is greater than or equal to 80%, and the projection light is incident on the transparent nanofilm at an incident angle of 38° to 85°.
